# EUROPEAN PATENT SPECIFICATION

(11) **EP 3 024 322 B1**
(45) Date of publication and mention of the grant of the patent: **28.08.2019**
(21) Application number: 14721414.2
(22) Date of filing: 06.05.2014
(51) Int. Cl.: A01M 29/12, A01M 1/20

(54) **WEARABLE INSECT REPELLENT FORMULATION DISPENSING SYSTEM**
TRAGBARES INSEKTENSCHUTZFORMULIERUNGSABGABESYSTEM
SYSTÈME DISTRIBUTEUR DE FORMULATION INSECTIFUGE PORTABLE SUR SOI

(30) Priority: 25.07.2013 GB 201313308
(43) Date of publication of application: 01.06.2016
(73) Proprietor: Menelaus B.V., 3439 ME Nieuwegein (NL)
(72) Inventor: MONSONÍS GÜELL, Eduard, 08005 Barcelona (ES); CORTÈS BAREA, Jordi, 08005 Barcelona (ES); DALMAU ARNAL, Frederic, 08005 Barcelona (ES)
(74) Representative: Henkel IP Department
(86) International application number: PCT/EP2014/059253
(87) International publication number: WO 2015/010801

(56) References cited:
- FR-A1- 2 678 080
- US-A1- 2009 148 483

## Description

### Field of the invention

The present invention relates to a wearable insect repellent formulation dispensing system, for example for carrying about or on a person, a replaceable or refillable supply or reservoir of an insect repellent formulation.

### Background of the invention

The use of evaporable or otherwise dispersible formulations in a user's immediate environment are well known, for example the use of perfumes and other fragrances, the use of insect repellents and insecticides, or any other formulation having one or more active ingredients. Such formulations are generally designed for topical application to a user's skin, to then evaporate or otherwise disperse, for example as a result of the user's body heat. There can however be a number of problems with the use of such topical formulations. The user may suffer an allergic or other adverse reaction to one or more of the ingredients of the formulation, often especially to one or more ingredients of an insect repellent formulation, which will result in the user discontinuing use of the formulation. Alternatively a user will often simply forget to apply the formulation, which may then have significant negative implications. Furthermore the mainly topical formulations may leave a residue or film on the user's skin, which is often considered undesirable and may then be the cause of a user omitting or reducing the frequency of use such a formulation.

It is also known to impregnate such formulations within a carrier material such a polymer or the like, and to then wear this carrier material, for example in the form of a bracelet, such that the formulation evaporates from the carrier material over time in order to provide the desired result, whether repelling insects or otherwise. US Patent Publication US 2009/0148528 discloses such an arrangement, whereby a material controllingly releases by evaporation a liquid active substance having a repellent function for mosquitoes and comprises a polymer material matrix impregnated with a liquid composition. The liquid composition contains a mixture of the active substance and a solute which reduces the active substance evaporation kinetics by decreasing a vapour pressure. A method for producing the material and an accessory comprising an element made therefrom are also described. This document teaches a desire to slow down the evaporation of the active substance from the polymer matrix in which it is impregnated, in order to increase the life span of the related product. However by doing so this may result in reduced efficacy of the active substance.

US 2009/0148483 A1 discloses a reservoir of an insect repellent formulation received in a cradle.

The present invention thus seeks to provide an alternative form of wearable formulation dispensing system, in particular a wearable insect repellent formulation dispensing system.

### Summary of the invention

According to the present invention there is provided a wearable insect repellent formulation dispensing system according to claim 1 comprising
a reservoir of an insect repellent formulation, the reservoir comprising a liquid impermeable side wall defining a mouth which is sealed by a liquid permeable membrane, and an insect repellent formulation contained within the reservoir; and
a cradle adapted to receive and retain the reservoir, the cradle defining a vent to facilitate air flow past, in use, the liquid permeable membrane of the reservoir.

Preferably, at least a portion of the liquid permeable membrane of the reservoir is transparent.

Preferably, at least a portion of the liquid impermeable side wall of the reservoir is transparent.

Preferably, the liquid impermeable side wall and the liquid permeable membrane of the reservoir are each made from a polymer.

Preferably, the reservoir is releasably retainable by the cradle.

According to the invention, the vent comprises first and second open ends such that the vent defines a passage through the cradle.

According to the invention, the cradle defines a cavity for receiving the reservoir.

Preferably, the cradle comprises a window into the cavity.

According to the invention, the cradle comprises an outer wall, the vent being disposed, in use, between the outer wall and the liquid permeable membrane of the reservoir.

Preferably, the cradle comprises a closure member displaceable between a first position overlying the cavity and a second position exposing the cavity.

Preferably, the closure member defines the outer wall.

Preferably, the wearable insect repellent formulation dispensing system comprises a retainer operable to enable the cradle to be secured to a person.

Preferably, the retainer comprises a wrist strap.

Preferably, the wrist strap and cradle are formed integrally with one another.

As used herein, the term "insect repellent formulation" includes insect repellent formulations, insecticidal formulations and biocidal formulations. The insect repellent formulation may include additional components including but not limited to perfumes, fragrances, or the like.

### Brief description of the drawings

The present invention will now be described with reference to the accompanying drawings, in which;
Figure 1 illustrates a perspective view, from above, of a wearable insect repellent formulation dispensing system according to an embodiment of the present invention, having a closure member in an open position;
Figure 2 illustrates the dispensing system shown in Figure 1 from below, again with the closure member in an open position;
Figure 3 illustrates an enlarged view of a central cradle portion of the dispensing system shown in Figures 1 and 2;
Figure 4 illustrates an empty reservoir or capsule forming part of the system illustrated in Figures 1-3, having a membrane omitted therefrom;
Figure 5 illustrates an alternative perspective view of the capsule shown in Figure 4, having the membrane in position thereon;
Figure 6 illustrates a perspective view, from above, of the dispensing system shown in Figures 1-3, but with the capsule of Figures 4 and 5 omitted;
Figure 7 illustrates a perspective view, from below, of the arrangement shown in Figure 6;
Figure 8 illustrates a perspective view of an alternative embodiment of a wearable formulation dispensing system according to the present invention, having a closure member in a closed position;
Figure 9 illustrates the alternative embodiment of Figure 8 with the closure member in an open position and with a reservoir or capsule forming part of the system being omitted;
Figure 10A illustrates a perspective view, from above, of a reservoir or capsule shown in Figure 8;
Figure 10B illustrates a perspective view, from below, of the reservoir or capsule shown in Figure 10A;
Figure 10C illustrates a perspective view, from above, of the reservoir or capsule of Figure 10A, in which a membrane and a liquid impermeable side wall of the reservoir or capsule are transparent; and
Figure 10D illustrates a perspective view, from below, of the reservoir or capsule of Figure 10C.

### Detailed Description of the Drawings

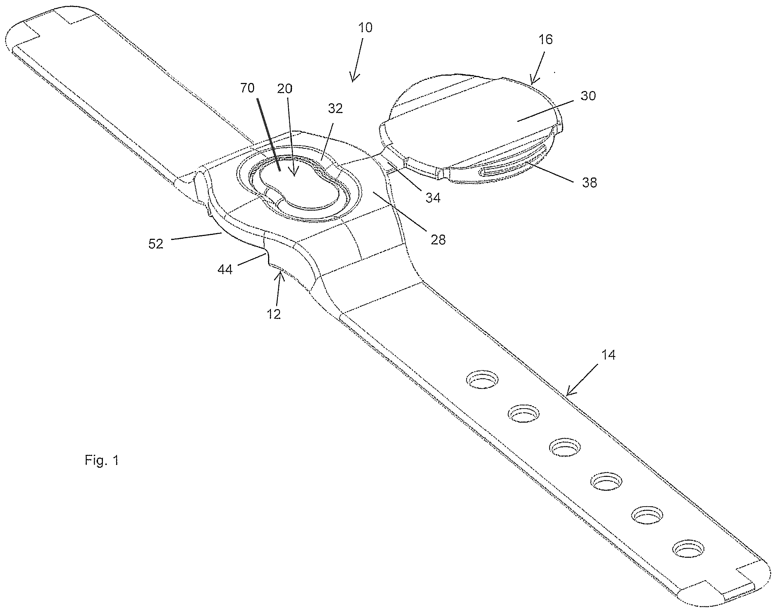

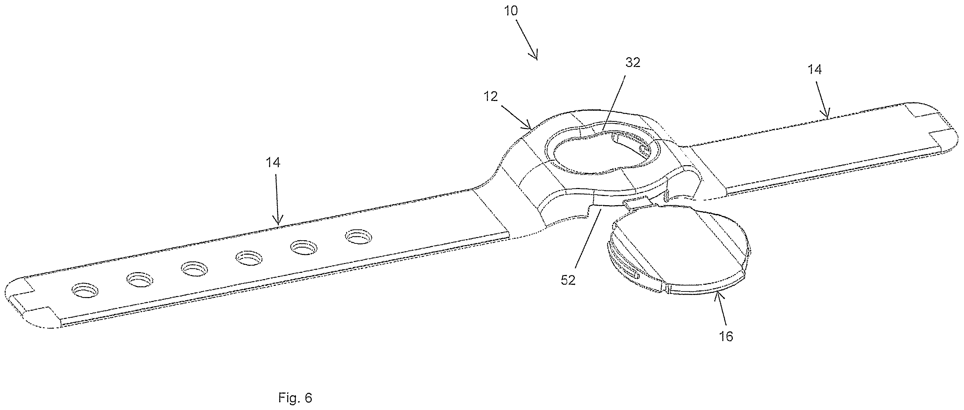

Referring now to Figures 1-7 there is illustrated a wearable insect repellent formulation dispensing system according to a first embodiment of the present invention, generally indicated as 10. As will be described in detail hereinafter, the system 10 comprises a supply or reservoir of an insect repellent formulation, and is adapted to be worn on or about the person's body so that the formulation can be dispensed from the system 10 in order to have the desired effects in the immediate environment surrounding the user. This arrangement avoids the requirement for the user to apply the insect repellent formulation directly to the skin.

In the present embodiment the system 10 is in the form of a wrist worn bracelet which can be releasably secured around a user's wrist or possibly ankle as desired. It will however be appreciated from the following description of the configuration and operation of the system 10 that the system 10 may be secured by any other suitable means and at any other desired location about the user, for example in the form of a pendant to be worn around the user's neck, or utilising a clip or some other means of securing the system 10 to a user's clothes, hair or the like.

The system 10 comprises a cradle 12 which forms a main body of the system 10, and from which extends, in the embodiment illustrated, a wrist strap 14 which acts as a retainer in order to allow the system 10 to be secured about the wrist of the user. In the embodiment illustrated the cradle 12 and strap 14 are formed integrally and from any suitable material, for example plastic, rubber, silicone or the like. It will be appreciated from the following description that the particular material or mix of materials for the cradle 12 and strap 14 are not essential to the functioning of the invention.

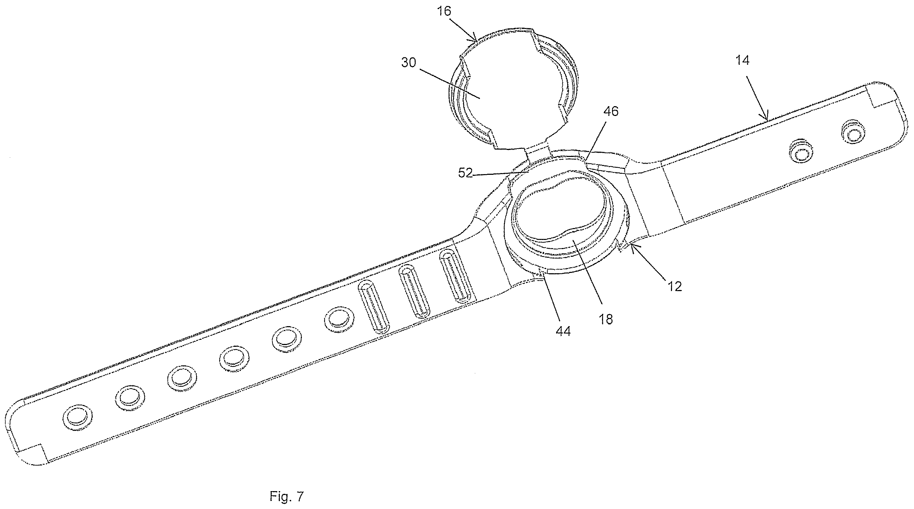

The cradle 12 is adapted to receive and releasably retain a reservoir of an insect repellent formulation, which reservoir also forms part of the system 10, and in this particular embodiment a closure member 16 is provided which may be opened to expose a cavity 18 formed internally of the cradle 12 and within which the formulation may be contained, as shown in Figure 7.

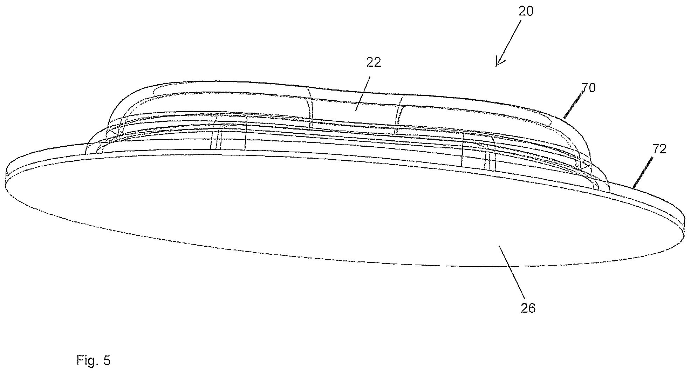

The reservoir of the formulation is defined, in the embodiment illustrated, by a capsule 20 which is from a polymer or the like, and is shaped to define a reservoir for receiving an amount of the desired formulation. The capsule 20 comprises a mouth 24 which, as illustrated in Figure 5, is sealed by a liquid permeable membrane 26 from which the formulation may evaporate once the capsule 20 has been filled with the formulation. Thus, in this embodiment, the liquid impermeable side wall 22 preferably defines a mouth 24 which is sealed by the liquid permeable membrane 26, and the capsule 20 comprises an insect repellent formulation contained therein. In use, and as will be described hereinafter, the insect repellent formulation is dispensed from the system 10 by passage through the membrane 26 in a controlled manner, in order to have the desired effect in the immediate area surrounding the wearer of the system 10. The capsule 20 is preferably but not essentially formed from a transparent material in order to allow visual inspection of the volume of formulation remaining at any given time. The liquid impermeable side wall 22 and the liquid permeable membrane 26 are preferably each made from a polymer, which may be the same or different, and which may be transparent. It will be appreciated that the side wall 22 is used as a general term for all portions of the capsule 20 except for the membrane 26, and includes, in this embodiment, an upstanding portion 70 and a flared portion 72. It will also be appreciated that the membrane 26 may be fused to the flared portion 72 of the side wall 22, but that the invention is not limited thereto.

The cradle 12 comprises a front wall 28 which in use faces away from the user's wrist or other body part against which the system 10 is to be worn, and a rear wall 30 which in use is located adjacent or against the wearers skin, in particular in the bracelet type embodiment illustrated. In this embodiment the rear wall 30 is defined by the closure member 16 which is displaceable between a first or open position as illustrated in Figures 1-3, and a second or closed position (not illustrated) in which the closure member 16 is releasably engaged against the underside of the cradle 12. In the embodiment illustrated the closure member 16 is formed integrally with the cradle 12 via a live hinge 34, although it will of course be appreciated that any other suitable functional alternative may be employed. When in the first open position, as is illustrated in Figure 7, the closure member 16 permits access to the cavity 18 formed within the cradle 12, in order to allow the capsule 20 to be inserted or removed from the cavity 18. The capsule 20 and cavity 14 are complimentary in shape and dimension such that the capsule 20 can be received and retained within the cavity 18 with a light press fit. The cavity 18 may optionally be provided with a window 32 formed in the front wall 28, which allows the visual identification of the upstanding portion 70 of the capsule 20 within the cradle 12. The capsule 20 and/or contained formulation and the cradle 12 may be formed from materials of different colour in order to allow a more prominent indication of the presence or otherwise of a capsule 20 within the cradle 12. With the capsule 20 fully seated within the cavity 18 an upper portion of the sidewall 22 is seated, with a light interference fit, within the window 32 in order to further retain the capsule 20 in position. The window 32 may also be used to assist in removing the capsule 20 from the cradle 12, by applying light pressure to the upstanding portion 70 of capsule 20 exposed by the window 32.

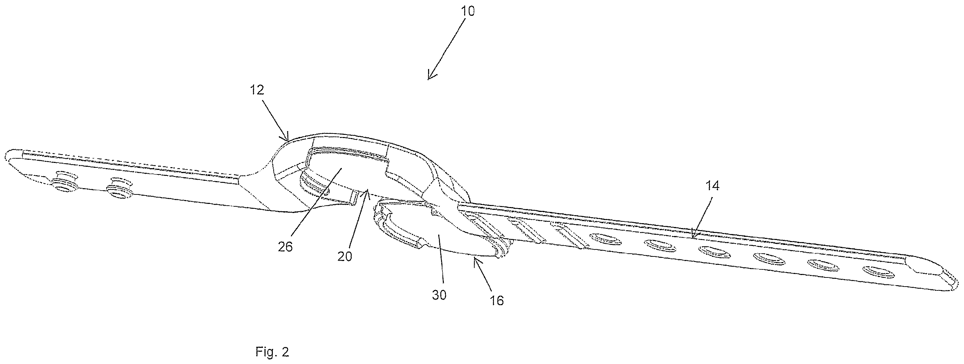

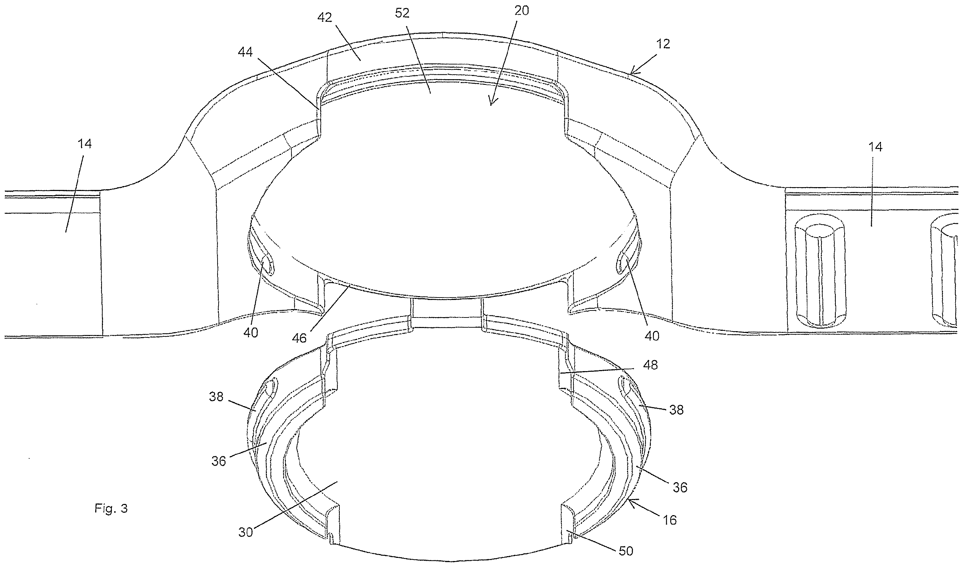

Referring now in particular to Figures 2 and 3 it can be seen that when the capsule 20 is fully seated within the cavity 18 the membrane 26 faces towards, but is spaced apart from, the rear wall 30 as defined by the closure member 16, when the closure member 16 is seated against the underside of the cradle 12. In this way a space is created between the membrane 26 and the opposed closure member 16, which space defines a vent 52 which permits the free flow of air past the membrane 26 in order to improve evaporation of the formulation from within the capsule 20, again as will be described in greater detail hereinafter. The capsule 20 is held in this position, elevated off the closure member 16, by means of a pair of upstanding abutments 36 which, in the embodiment illustrated, are located on opposed portions of the closure member 16. The abutments 36 are dimensioned such that a lip of each abutment will contact and apply light pressure to the membrane 26 when the closure member 16 is displaced into the second or closed position. The abutments 36 will therefore prevent the capsule 20 from dropping downwardly out of its seated position within the cavity 18. This will ensure that the gap or vent 52 between the membrane 26 and closure member 16 is maintained. It is therefore to be understood that the cradle 12 need not incorporate the cavity 18 for receiving the capsule 20, but need only be capable of retaining the capsule 20 at a position in which a space or vent 52 is defined directly adjacent the membrane 26 for the above reasons.

In order to ensure that the closure member 16 remains in the closed position once engaged with the cradle 12, an elongate detent 38 is provided on the exterior of each abutment 36, with a corresponding recess 40 being provided on the interior wall of the cradle 12 in order to receive the detents 38. It will of course be understood that any other suitable means may be employed in order to secure the closure member 16 in the second or closed position against the underside of the cradle 12.

Referring again to Figure 3 it can be seen that a sidewall 42 of the cradle 12 is cut away to form opposed first and second openings 44, 46, while the space between the opposed abutments 36 on the closure member 16 serve to define corresponding first and second openings 48, 50 on the closure member 16. Thus when the closure member 16 is secured in the closed position these openings 44, 46, 48, 50 form the opposed free ends of the vent 52 which thus forms a passage extending directly through the cradle 12 and providing exterior access or communication with the space defined between the membrane 26 and the closure member 16. In this way air is free to flow through the interior of the cradle 12 via the vent 52 in order to promote evaporation of the formulation contained within the capsule 20. It should however be appreciated that while the vent 52 of the present embodiment is in the form of a through passage extending from one side of the cradle 12 to the other, a single opening could be provided as access to the space between the membrane 26 and closure member 16, which would still facilitate the flow of air past the membrane 26. Similarly rather than single openings 44, 46 in opposed sides of the cradle 12, it is also envisaged that the side wall 42, whether in whole or in part, could for example could be perforated or reticulated in order to again permit airflow through the cradle 12 past the membrane 26.

Turning then to the operation of the system 10, a user will initially open the closure member 16 in order to gain access to the cavity 18 within the cradle 12. The user will then select the desired capsule 20 containing an insect repellent therein, and press the capsule 20 into the cavity 18 such that the upstanding portion 70 of the capsule 20 is contained within the rim of the window 32. The closure member 16 is then hinged into the closed position such that the abutments 36 press against the membrane 26 in order to retain the capsule 20 in the correct position within the cradle 12. Closing of the closure member 16 also serves to define the vent 52 passing through the cradle 12 and past the membrane 26. The user then secures the system 10 in place, for example about the user's wrist using the strap 14 in conventional fashion. When positioned on the user's wrist the closure member 16 contacts the user's skin and forms a protective wall between the skin and the capsule 20, in particular the membrane 26 thereof.

The insect repellent formulation will now begin to migrate through the membrane 26 and evaporate from the exterior side thereof, in order to provide its intended functionality. The formulation within the capsule 20 is preferably composed of volatile components in a liquid state, although a gel or other forms may be employed. The membrane 26 is permeable to the components of the formulation, and dispensing of the formulation occurs through crossing the membrane 26 and reaching the external side thereof in order to undergo evaporation to the surrounding environment. The vapour pressure of each component of the formulation affects the evaporation rate of the formulation, and consequentially the formulation is preferably designed to have a balanced and homogenous rate of evaporation. The volume of the capsule 20 and/or the design of the membrane 26 is preferably chosen to result in evaporation of the entire contents of the capsule 20 over a predetermined period of time, for example a number of days or weeks. Once the capsule 20 is empty, which is preferably determined through visual inspection via the window 32, or prior to that should the user so desire, the capsule 20 may be replaced. By having at least a portion of one or both of the liquid impermeable side wall 22 and the liquid permeable membrane 26 transparent, for example being made from a transparent polymer, it is conveniently very easy for a user to determine the end of life of the capsule, or when a capsule is about to run out of formulation. The formulation may also be provided with a contrasting colour which will further conveniently assist visual inspection. Replacement of the capsule 20 is quickly and easily achieved by opening the closure member 16, applying light pressure to the upstanding portion 70 of the capsule 20 through the window 32, thus allowing the capsule 20 to pop out of the cavity 18 and to then be replaced.

The provision of the vent 52 enables air to flow past the membrane 26 in order to improve the evaporation of the formulation from within the capsule 20. This airflow also increases the dispersion of the evaporated formulation into the immediate environment surrounding the user, thus increasing the performance of the system 10. In addition, when the system 10 is designed to be worn at the extremity of a user's limbs, for example as in the embodiment illustrated when worn as a bracelet, the system 10 will generally undergo increased movement through movement of the user, thus generating an active flow of air through the vent 52, again further increasing the efficacy of the system 10.

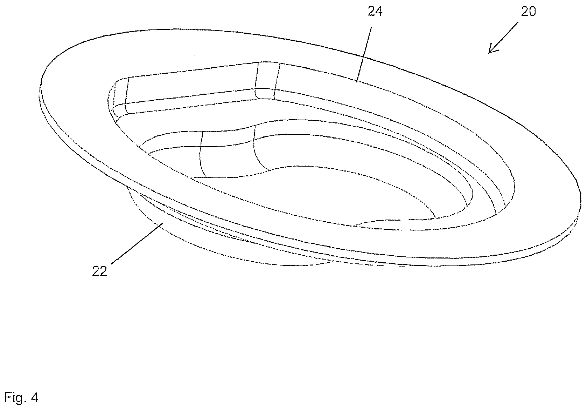

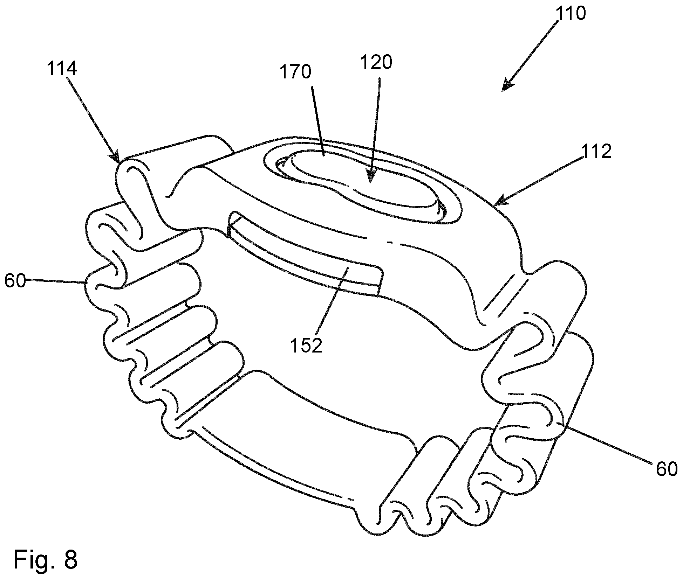

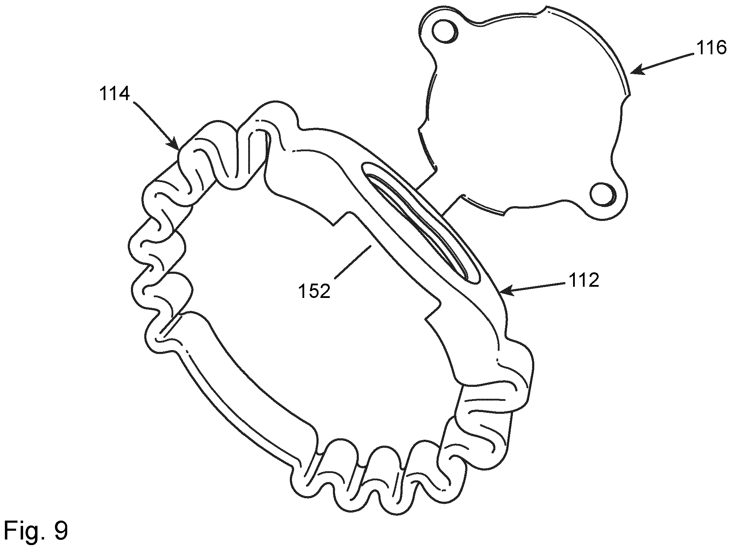

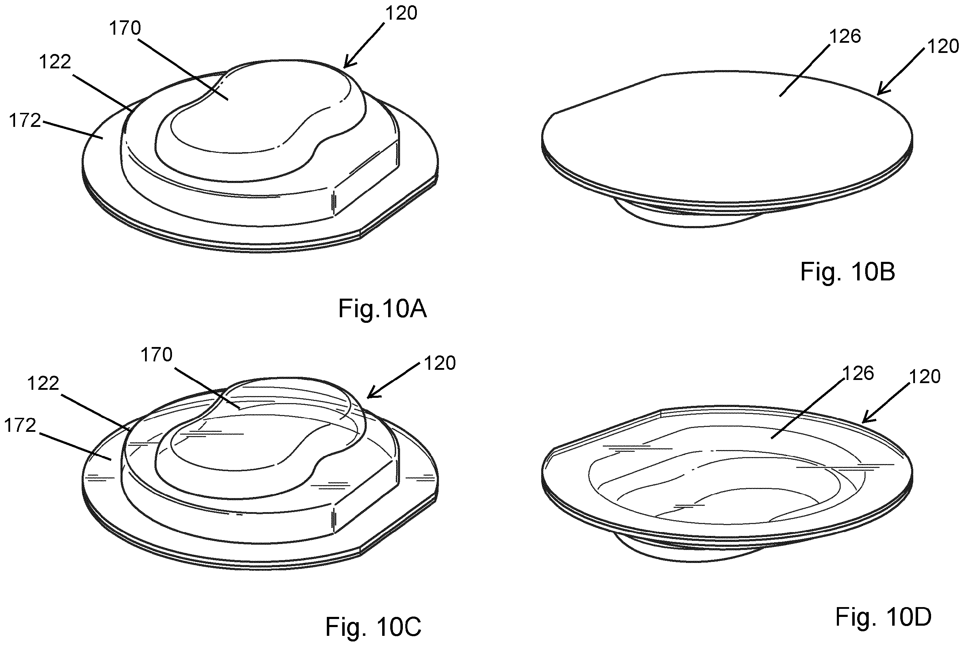

Referring now to Figures 8, 9, and 10A - 10D, there is illustrated a second embodiment of a wearable insect repellent formulation dispensing system according to the present invention, generally indicated as 110. In this second embodiment like components have been accorded like reference numerals and unless otherwise stated perform a like function. The system 110 again comprises a cradle 112 which is preferably formed integrally with a strap 114 in order to allow the system 110 to be worn about a users wrist or the like in the form of a bracelet. The cradle 112 comprises a closure member 116 which may be hinged into an open position in order to allow a capsule 120, also forming part of the system 110, to be inserted into or removed from the cradle 112 as hereinbefore described with reference to the first embodiment. The cradle 112 and closure member 116 together define a vent 152 which passes through the lower portion of the cradle 112 and past a membrane 126 of the capsule 120. This vent 152 again facilitates the improved evaporation of a formulation contained within the capsule 120. A transparent version of the capsule 120 is shown in Figures 10C and 10D. It will be appreciated that although the capsule 120 is indicated above for use as part of the second embodiment, the capsule 120 may equally be used as part of the first embodiment. It will be further appreciated that the capsule 20, 120 is not limited to the shape and configuration shown in Figures 4, 5 and 10A - 10D, and that any other reservoir comprising a liquid impermeable side wall defining a mouth which is sealed by a liquid permeable membrane, and an insect repellent formulation contained therein, may be used.

Unlike the system 10 of the first embodiment, the system 110 does not employ a two part closable strap, but rather the strap 114 is in the form of a permanently closed loop but comprising elastically deformable and expandable concertina portions 60 which allow the strap 114 to be stretched in length to be past over a user's hand and to then constrict again in order to provide a snug fit about the user's wrist.

## Claims

1. A wearable insect repellent formulation dispensing system (10, 110) comprising
a reservoir of an insect repellent formulation, the reservoir comprising a liquid impermeable side wall (22) defining a mouth (24) which is sealed by a liquid permeable membrane (26, 126), and an insect repellent formulation contained within the reservoir; and
a cradle (12, 112) adapted to receive and retain the reservoir, the cradle (12, 112) defining a vent (52, 152) to facilitate air flow past, in use, the liquid permeable membrane (26, 126) of the reservoir, wherein
the cradle (12, 112) defines a cavity (18) for receiving the reservoir; and
the cradle (12, 112) comprises an outer wall (30), the vent (52, 152) being disposed, in use, between the outer wall (30) and the liquid permeable membrane (26, 126) of the reservoir, wherein the vent (52, 152) comprises first and second open ends such that the vent (52, 152) defines a passage through the cradle (12, 112).

2. A wearable insect repellent formulation dispensing system (10, 110) according to claim 1, wherein at least a portion of the liquid permeable membrane (26, 126) of the reservoir is transparent.

3. A wearable insect repellent formulation dispensing system (10, 110) according to claim 1 or claim 2, wherein at least a portion of the liquid impermeable side wall (22) of the reservoir is transparent.

4. A wearable insect repellent formulation dispensing system (10, 110) according to any preceding claim, wherein the liquid impermeable side wall (22) and the liquid permeable membrane (26, 126) of the reservoir are each made from a polymer.

5. A wearable insect repellent formulation dispensing system (10, 110) according to any preceding claim, wherein the reservoir is releasably retainable by the cradle (12, 112).

6. A wearable insect repellent formulation dispensing system (10, 110) according to any preceding claim in which the cradle (12, 112) comprises a window (32) into the cavity.

7. A wearable insect repellent formulation dispensing system (10, 110) according to any of the previous claims, in which the cradle (12, 112) comprises a closure member /16, 116) displaceable between a first position overlying the cavity and a second position exposing the cavity.

8. A wearable insect repellent formulation dispensing system (10, 110) according to claim 7, in which the closure member (16, 116) defines the outer wall (30).

9. A wearable insect repellent formulation dispensing system (10, 110) according to any preceding claim comprising a retainer operable to enable the cradle (12, 112) to be secured to a person.

10. A wearable insect repellent formulation dispensing system (10, 110) according to claim 9 in which the retainer comprises a wrist strap.

11. A wearable insect repellent formulation dispensing system (10, 110) according to claim 10 in which the wrist strap and cradle (12, 112) are formed integrally with one another.

## Patentansprüche

1. Tragbares Insektenabwehrmittelformulierungsabgabesystem (10, 110), umfassend einen Vorratsbehälter einer Insektenabwehrmittelformulierung, wobei der Vorratsbehälter eine flüssigkeitsundurchlässige Seitenwand (22) umfasst, die eine Öffnung (24) definiert, die durch eine flüssigkeitsdurchlässige Membran (26, 126) versiegelt ist, und eine Insektenabwehrmittelformulierung, die in dem Vorratsbehälter enthalten ist; und
ein Gestell (12, 112), das angepasst ist, um den Vorratsbehälter aufzunehmen und zu halten, wobei das Gestell (12, 112) ein Luftloch (52, 152) definiert, um, in Verwendung, einen Luftstrom an der flüssigkeitsdurchlässigen Membran (26, 126) des Vorratsbehälters vorbei zu erleichtern, wobei das Gestell (12, 112) einen Hohlraum (18) zum Aufnehmen des Vorratsbehälters definiert; und
das Gestell (12, 112) eine Außenwand (30) umfasst, wobei das Luftloch (52, 152), in Verwendung, zwischen der Außenwand (30) und der flüssigkeitsdurchlässigen Membran (26, 126) des Vorratsbehälters angeordnet ist, wobei das Luftloch (52, 152) ein erstes und ein zweites offenes Ende derart umfasst, dass das Luftloch (52, 152) einen Durchgang durch das Gestell (12, 112) definiert.

2. Tragbares Insektenabwehrmittelformulierungsabgabesystem (10, 110) nach Anspruch 1, wobei mindestens ein Abschnitt der flüssigkeitsdurchlässigen Membran (26, 126) des Vorratsbehälters transparent ist.

3. Tragbares Insektenabwehrmittelformulierungsabgabesystem (10, 110) nach Anspruch 1 oder 2, wobei mindestens ein Abschnitt der flüssigkeitsundurchlässigen Seitenwand (22) des Vorratsbehälters transparent ist.

4. Tragbares Insektenabwehrmittelformulierungsabgabesystem (10, 110) nach einem der vorhergehenden Ansprüche, wobei die flüssigkeitsundurchlässige Seitenwand (22) und die flüssigkeitsdurchlässige Membran (26, 126) des Vorratsbehälters jeweils aus einem Polymer gefertigt sind.

5. Tragbares Insektenabwehrmittelformulierungsabgabesystem (10, 110) nach einem der vorhergehenden Ansprüche, wobei der Vorratsbehälter durch das Gestell (12, 112) lösbar haltbar ist.

6. Tragbares Insektenabwehrmittelformulierungsabgabesystem (10, 110) nach einem der vorhergehenden Ansprüche, wobei das Gestell (12, 112) ein Fenster (32) in das Gestell hinein umfasst.

7. Tragbares Insektenabwehrmittelformulierungsabgabesystem (10, 110) nach einem der vorhergehenden Ansprüche, wobei das Gestell (12, 112) ein Verschlusselement (16, 116) umfasst, das zwischen einer ersten den Hohlraum überlagernden Position und einer zweiten den Hohlraum freilegenden Position verschiebbar ist.

8. Tragbares Insektenabwehrmittelformulierungsabgabesystem (10, 110) nach Anspruch 7, wobei das Verschlusselement (16, 116) die Außenwand (30) definiert.

9. Tragbares Insektenabwehrmittelformulierungsabgabesystem (10, 110) nach einem der vorhergehenden Ansprüche, umfassend eine Halterung, die betriebsfähig ist, um es dem Gestell (12, 112) zu ermöglichen, an einer Person befestigt zu werden.

10. Tragbares Insektenabwehrmittelformulierungsabgabesystem (10, 110) nach Anspruch 9, wobei die Halterung ein Handgelenkband umfasst.

11. Tragbares Insektenabwehrmittelformulierungsabgabesystem (10, 110) nach Anspruch 10, wobei das Handgelenkband und das Gestell (12, 112) einstückig miteinander ausgebildet sind.

## Revendications

1. Système distributeur de formulation insectifuge pouvant être porté (10, 110) comprenant un réservoir d'une formulation insectifuge, le réservoir comprenant une paroi latérale imperméable aux liquides (22) définissant une embouchure (24) qui est scellée par une membrane perméable aux liquides (26, 126), et une formulation insectifuge contenue à l'intérieur du réservoir ; et
un berceau (12, 112) adapté pour recevoir et retenir le réservoir, le berceau (12, 112) définissant un évent (52, 152) pour faciliter la circulation de l'air à travers, lors de l'utilisation, la membrane perméable aux liquides (26, 126) du réservoir, le berceau (12, 112) définissant une cavité (18) pour recevoir le réservoir ; et
le berceau (12, 112) comprenant une paroi extérieure (30), l'évent (52, 152) étant disposée, lors de l'utilisation, entre la paroi extérieure (30) et la membrane perméable aux liquides (26, 126) du réservoir, l'évent (52, 152) comprenant des première et seconde extrémités ouvertes de telle sorte que l'évent (52, 152) définit un passage à travers le berceau (12, 112).

2. Système distributeur de formulation insectifuge pouvant être porté (10, 110) selon la revendication 1, dans lequel au moins une partie de la membrane perméable aux liquides (26, 126) du réservoir est transparente.

3. Système distributeur de formulation insectifuge pouvant être porté (10, 110) selon la revendication 1 ou la revendication 2, dans lequel au moins une partie de la paroi latérale imperméable aux liquides (22) du réservoir est transparente.

4. Système distributeur de formulation insectifuge pouvant être porté (10, 110) selon l'une quelconque des revendications précédentes, dans lequel la paroi latérale imperméable aux liquides (22) et la membrane perméable aux liquides (26, 126) du réservoir sont chacune constituées d'un polymère.

5. Système distributeur de formulation insectifuge pouvant être porté (10, 110) selon l'une quelconque des revendications précédentes, dans lequel le réservoir peut être retenu de façon amovible par le berceau (12, 112).

6. Système distributeur de formulation insectifuge pouvant être porté (10, 110) selon l'une quelconque des revendications précédentes, dans lequel le berceau (12, 112) comprend une lunette (32) dans la cavité.

7. Système distributeur de formulation insectifuge pouvant être porté (10, 110) selon l'une quelconque des revendications précédentes, dans lequel le berceau (12, 112) comprend un élément de fermeture (16, 116) déplaçable entre une première position recouvrant la cavité et une deuxième position exposant la cavité.

8. Système distributeur de formulation insectifuge pouvant être porté (10, 110) selon la revendication 7, dans lequel l'élément de fermeture (16, 116) définit la paroi extérieure (30).

9. Système distributeur de formulation insectifuge pouvant être porté (10, 110) selon l'une quelconque des revendications précédentes, comprenant un élément de retenue pouvant être utilisé pour permettre au berceau (12, 112) d'être bien attaché à une personne.

10. Système distributeur de formulation insectifuge pouvant être porté (10, 110) selon la revendication 9, dans lequel l'élément de retenue comprend un bracelet.

11. Système distributeur de formulation insectifuge pouvant être porté (10, 110) selon la revendication 10, dans lequel le bracelet et le berceau (12, 112) sont formés d'un seul tenant l'un avec l'autre.
